(19) 

Europäisches
Patentamt
European
Patent Office
Office européen
des brevets

(11) **EP 3 260 309 B1**

(12) **EUROPEAN PATENT SPECIFICATION**

(45) Date of publication and mention
of the grant of the patent:
**07.08.2019 Bulletin 2019/32**

(51) Int Cl.:
***B60C 11/03*** *(2006.01)*     ***B60C 11/12*** *(2006.01)*

(21) Application number: **17175811.3**

(22) Date of filing: **13.06.2017**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2016 JP 2016125165**

(43) Date of publication of application:
**27.12.2017 Bulletin 2017/52**

(73) Proprietor: **Sumitomo Rubber Industries, Ltd.
Kobe-shi, Hyogo-ken (JP)**

(72) Inventors:
• **WAKASUGI, Masashi**
**Kobe-shi, Hyogo 651-0072 (JP)**
• **KAWAGOE, Yoshifumi**
**Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A2- 2 781 374**     **JP-A- 2012 218 650**
**JP-A- 2016 022 800**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a pneumatic tire having improved steering stability.

Description of Background Art

Japanese Patent Laid-Open Publication No. 2014-184828 describes a pneumatic tire in which main grooves each continuously extending in a tire circumferential direction are respectively provided on a tire equator and on both sides of the tire equator.

JP 2016 022800 A discloses a pneumatic tire comprising the features according to the preamble of claim 1.

JP 2012 218 650 A discloses a tire according to a related technology but without any sipes within a crown land region located close to a tire equator in a tread portion of the tire.

SUMMARY OF THE INVENTION

According to one aspect of the present invention, a pneumatic tire includes a tread part having a pair of crown main grooves formed on outer sides of a tire equator and continuously extending in a tire circumferential direction respectively, a pair of shoulder main grooves formed on tire axial direction outer sides of the crown main grooves and continuously extending in the tire circumferential direction respectively, a crown land portion formed between the pair of the crown main grooves, a pair of middle land portions formed between the crown main grooves and the shoulder main grooves, and a pair of shoulder land portions positioned on tire axial direction outer sides of the shoulder main grooves. The crown land portion and the middle land portions are formed such that no grooves each having a width of 2 mm or more are formed in the crown land portion and the middle land portions, the tread part has a first tread half defined from the tire equator to a first tread ground contact edge and a second tread half defined from the tire equator to a second tread ground contact edge on an opposite side with respect to the first tread ground contact edge, the tread part has first sipes formed in the first tread half such that each first sipe has a width of less than 2 mm and is extending smoothly continuously from the crown land portion to the shoulder land portion via the crown main groove and the shoulder main groove, the tread part has second sipes formed in the second tread half such that each second sipe has a width of less than 2 mm and is extending smoothly continuously from the crown land portion to the shoulder land portion via the crown main groove and the shoulder main groove and terminated without reaching the second tread ground contact edge, and the tread part has third sipes formed in the middle land portion in the second tread half such that each third sipe has a width of less than 2 mm and is extending in the tire axial direction between a pair of the second sipes that are adjacent to each other in the tire circumferential direction.

BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Fig. 1 is a developed view of a tread part of a pneumatic tire according to an embodiment of the present invention;
Fig. 2 is a cross-sectional view along an A-A line of the tread part of Fig. 1;
Fig. 3 is an enlarged developed view of a first tread half in Fig. 1;
Fig. 4 is an enlarged developed view of a second tread half in Fig. 1;
Fig. 5 is a cross-sectional view along a B-B line of the tread part in Fig. 1; and
Fig. 6 is a cross-sectional view along a C-C line of the tread part in Fig. 1.

DETAILED DESCRIPTION OF THE EMBODIMENTS

The embodiments will now be described with reference to the accompanying drawings, wherein like reference numerals designate corresponding or identical elements throughout the various drawings.

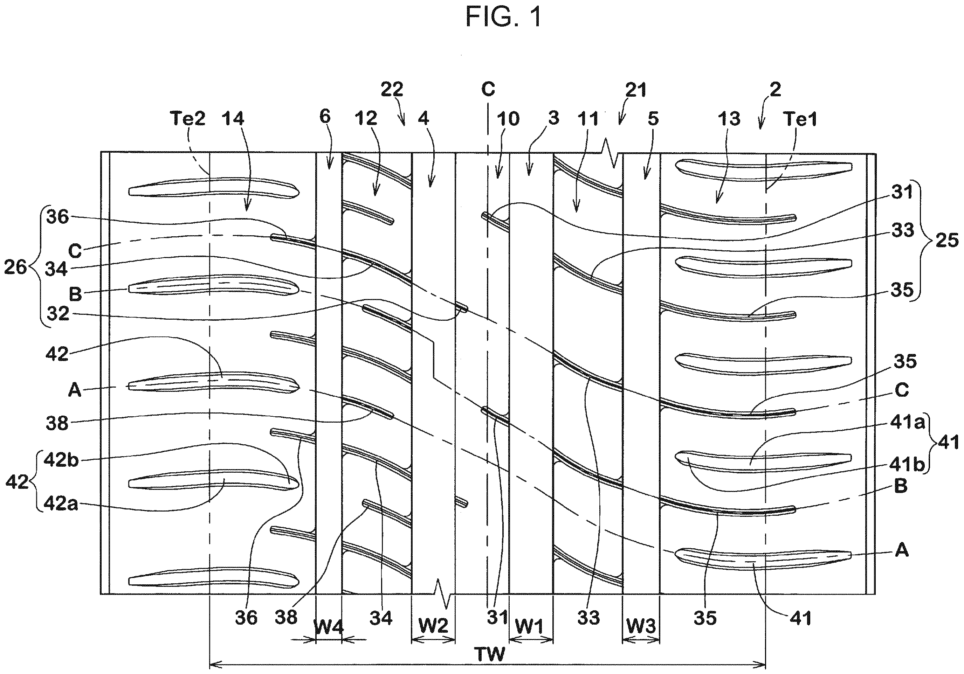

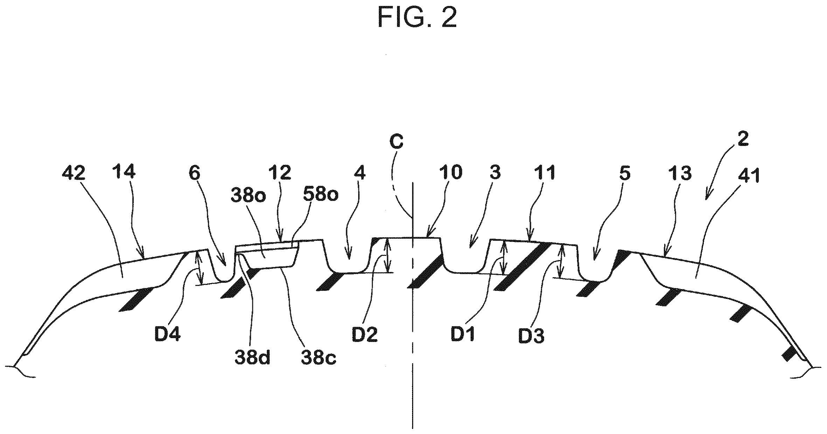

Fig. 1 is a developed view of a tread part 2 of a pneumatic tire (not entirely illustrated in the drawings) of the present embodiment. Fig. 2 is a cross-sectional view along an A-A line of the tread part 2 of Fig. 1. The pneumatic tire of the present embodiment can be suitably used, for example, as a pneumatic tire for a passenger car, and has an asymmetrical tread pattern in which a mounting orientation for mounting the pneumatic tire on a vehicle is specified. The mounting orientation for mounting the pneumatic tire on a vehicle is displayed, for example, on a side wall part (not illustrated in the drawings) using characters or the like.

As illustrated in Fig. 1, the pneumatic tire of the present embodiment has a pair of crown main grooves (3, 4) continuously extending in a tire circumferential direction and a pair of shoulder main grooves (5, 6) continuously extending in the tire circumferential direction. The crown main grooves (3, 4) are respectively formed on both outer sides of a tire equator (C). The shoulder main groove 5 is formed on a tire axial direction outer side of the crown main groove 3, and the shoulder main groove 6 is formed on a tire axial direction outer side of the crown main groove 4. The crown main grooves (3, 4) and the shoulder main grooves (5, 6) of the present embodiment are straight grooves that linearly extend. Such crown main grooves (3, 4) and shoulder main grooves (5, 6) have excellent drainage performance and allow wet performance of the pneumatic tire to be improved.

Widths (W1, W2) of the crown main grooves (3, 4) and widths (W3, W4) of the shoulder main grooves (5, 6) may be determined in various ways. For example, in the present embodiment, in a pneumatic tire for passenger car, the widths (W1, W2, W3, W4) are desirably each 4.0% - 8.5% of a tread ground contact width (TW). When the widths (W1, W2, W3, W4) are each less than 4.0% of the tread ground contact width (TW), there is a risk that drainage performance may be affected. On the other hand, when the widths (W1, W2, W3, W4) each exceed 8.5% of the tread ground contact width (TW), there is a risk that a rubber volume of the tread part 2 may decrease and wear resistance may be affected.

The "tread ground contact width (TW)" refers to a tire axial direction distance between tread ground contact edges (Te1, Te2) when the tire in a normal state is loaded with a normal load and is grounded on a flat surface at a camber angle of 0 degrees.

The "tread ground contact edges (Te1, Te2)" respectively refer to tread ground contact edges on tire axial direction outermost sides when the tire in the normal state is loaded with the normal load and is grounded on a flat surface at the camber angle of 0 degrees. The term "normal state" refers to a no-load state in which the tire is mounted to a normal rim (not illustrated in the drawings) and is filled with air at a normal internal pressure. In the following, unless otherwise specified, values of dimensions and the like of the parts of the tire are values measured in the internal state.

The term "normal rim" refers to a rim for which standards are set for each tire in a system of standards that includes standards on which the tire is based. For example, the "normal rim" refers to a "Standard Rim" in the JATMA standards, a "Design Rim" in the TRA standards, or a "Measuring Rim" in the ETRTO standards.

The term "normal internal pressure" refers to an air pressure for which standards are set for each tire in a system of standards that includes the standards on which the tire is based, and refers to a "Highest Air Pressure" in the JATMA standards, a maximum value published in the table "Tire Load Limits at Various Cold Inflation Pressures" in the TRA standards, or an "Inflation Pressure" in the ETRTO standards. When the tire is for a passenger car, the normal internal pressure is 180 kPa.

The term "normal load" refers to a load for which standards are set for each tire in a system of standards that includes the standards on which the tire is based, and refers to a "Maximum Load Capacity" in the JATMA standards, a maximum value published in the table "Tire Load Limits at Various Cold Inflation Pressures" in the TRA standards, or a "Load Capacity" in the ETRTO standards. When the tire is for a passenger car, the normal load is a load corresponding to 88% of the above-described load.

As illustrated in Fig. 2, depths (D1, D2) of the crown main grooves (3, 4) and depths (D3, D4) of the shoulder main grooves (5, 6) may be determined in various ways. In the present embodiment, when the pneumatic tire is for a passenger car, the depths (D1, D2, D3, D4) are desirably each 5 - 10 mm.

When the depths (D1, D2, D3, D4) are each less than 5 mm, there is a risk that the drainage performance may be affected. On the other hand, when the depths (D1, D2, D3, D4) each exceed 10 mm, there is a risk that rigidity of the tread part 2 may be insufficient and steering stability may be affected.

Due to the crown main grooves (3, 4) and the shoulder main grooves (5, 6), the tread part 2 is divided into a crown land portion 10, middle land portions (11, 12), and shoulder land portions (13, 14). The crown land portion 10 is positioned between the pair of the crown main grooves (3, 4). The middle land portion 11 is positioned between the crown main groove 3 and the shoulder main groove 5, and the middle land portion 12 is positioned between the crown main groove 4 and the shoulder main groove 6. The shoulder land portion 13 is positioned on a tire axial direction outer side of the shoulder main groove 5, and the shoulder land portion 14 is positioned on a tire axial direction outer side of the shoulder main groove 6.

The tread part 2 has a first tread half 21 from the tire equator (C) to the first tread ground contact edge (Te1) and a second tread half 22 from the tire equator (C) to the second tread ground contact edge (Te2). The second tread ground contact edge (Te2) is positioned on an opposite side of the first tread ground contact edge (Te1).

It is desirable that the pneumatic tire of the present embodiment be mounted such that the first tread half 21 faces an inner side of a vehicle. The first tread half 21 has the first crown main groove 3, the first shoulder main groove 5, the crown land portion 10, the first middle land portion 11 and the first shoulder land portion 13. The second tread half 22 has the second crown main groove 4, the second shoulder main groove 6, the crown land portion 10, the second middle land portion 12 and the second shoulder land portion 14.

The crown land portion 10 is positioned on both sides of the tire equator (C). Due to such a crown land portion 10, initial responsiveness during steering is improved and good steering stability is obtained.

In the present embodiment, in the first tread half 21, grooves each having a width of 2 mm or more are not provided in the crown land portion 10 and the first middle land portion 11. Therefore, in the crown land portion 10 and the first middle land portion 11, there are no groove edges that tend to become starting points of uneven wear such as so-called heel-and-toe wear, and thus, uneven wear resistance is increased.

Similarly, in the second tread half 22, grooves each having a width of 2 mm or more are not provided in the crown land portion 10 and the second middle land portion 12. Therefore, in the crown land portion 10 and the second middle land portion 12, there are no groove edges that tend to become starting points of uneven wear such as so-called heel-and-toe wear, and thus, uneven wear resistance is increased.

In the first tread half 21, multiple first sipes 25 each having a width of less than 2 mm are provided. In the present embodiment, in the first tread half 21, grooves each having a width of 2 mm or more are not provided in the crown land portion 10 and the first middle land portion 11. Therefore, there is a risk that drainage performance of the crown land portion 10 and the first middle land portion 11 may be affected. However, due to an edge effect of the first sipes 25, sufficient wet performance can be easily ensured. Each of the first sipes 25 extends in the tire axial direction while being curved in an arc shape. Such first sipes 25 contribute to improvement in steering stability by dispersing a load in multiple directions.

In the first tread half 21, the first sipes 25 each smoothly continuously extend from the crown land portion 10 through the first middle land portion 11 to the first shoulder land portion 13 via the first crown main groove 3 and the first shoulder main groove 5. As a result, the crown land portion 10, the first middle land portion 11 and the first shoulder land portion 13 of the first tread half 21 deform in the same mode along the first sipes 25. Therefore, transient characteristics during cornering, in which a center of a tread surface moves from the crown land portion 10 to the first shoulder land portion 13, are improved, and good steering stability can be obtained.

Similarly, in the second tread half 22, multiple second sipes 26 each having a width of less than 2 mm are provided. In the present embodiment, in the second tread half 22, grooves each having a width of 2 mm or more are not provided in the crown land portion 10 and the second middle land portion 12. Therefore, there is a risk that drainage performance of the crown land portion 10 and the second middle land portion 12 may be affected. However, due to an edge effect of the second sipes 26, sufficient wet performance can be easily ensured. Each of the second sipes 26 extends in the tire axial direction while being curved in an arc shape. Such second sipes 26 contribute to improvement in steering stability by dispersing a load in multiple directions.

In the second tread half 22, the second sipes 26 each smoothly continuously extend from the crown land portion 10 through the second middle land portion 12 to the second shoulder land portion 14 via the second crown main groove 4 and the second shoulder main groove 6. As a result, the crown land portion 10, the second middle land portion 12 and the second shoulder land portion 14 of the second tread half 22 deform in the same mode along the second sipes 26. Therefore, transient characteristics during cornering, in which a center of a tread surface moves from the crown land portion 10 to the second shoulder land portion 14, are improved, and good steering stability can be obtained.

The second sipes 26 are each terminated without reaching the second tread ground contact edge (Te2). As a result, rigidity of the second shoulder land portion 14 of the second tread half 22 is increased, and grip performance during cornering, in which a ground contact pressure of the second shoulder land portion 14 is increased, can be improved, and good steering stability can be obtained.

In the second middle land portion 12 of the second tread half 22, third sipes 38 each having a width of less than 2 mm are each provided between a pair of second sipes 26 that are adjacent to each other in the tire circumferential direction. The third sipes 38 extend in the tire axial direction along the second sipes 26. Due to an edge effect of the third sipes 38, grip performance of the pneumatic tire is improved, and steering stability is more easily improved. Further, due to the second sipes 26 and the third sipes 38, a density of the sipes gradually decreases from the second middle land portion 12 of the second tread half 22 to the second tread ground contact edge (Te2). As a result, rigidity of the land portions is gradually increased from the second middle land portion 12 to the second tread ground contact edge (Te2), and transient characteristics and grip performance during cornering are improved, and even better steering stability can be obtained.

The first sipes 25 are divided into first crown sipes 31, first middle sipes 33 and first shoulder sipes 35 by the first crown main groove 3 and the first shoulder main groove 5. Since the first sipes 25 each smoothly continuously extend via the first crown main groove 3 and the first shoulder main groove 5, the first middle sipes 33 are respectively formed on imaginary extension lines that are respectively formed by smoothly extending the crown sipes 31, and the first shoulder sipes 35 are respectively formed on imaginary extension lines that are respectively formed by smoothly extending the first middle sipes 33.

Similarly, the second sipes 26 are divided into second crown sipes 32, second middle sipes 34 and second shoulder sipes 36 by the second crown main groove 4 and the second shoulder main groove 6. Since the second sipes 26 each smoothly continuously extend via the second crown main groove 4 and the second shoulder main groove 6, the second middle sipes 34 are respectively formed on imaginary extension lines that are respectively formed by smoothly extending the crown sipes 32, and the second shoulder sipes 36 are respectively formed on imaginary extension lines that are respectively formed by smoothly extending the second middle sipes 34.

In the crown land portion 10, the multiple first crown sipes 31 are provided. Each of the first crown sipes 31 extends in the tire axial direction from the first crown main groove 3 toward the tire equator (C) while being curved in an arc shape. The first crown sipes 31 each have a width of less than 2 mm. Such first crown sipes 31 achieve an edge effect and improve wet performance. Further, the first crown sipes 31 are closed on a tread surface when a normal load is loaded, and thus suppress a decrease in rigidity of the crown land portion 10. As a result, steering stability is improved. Further, groove edges of first crown sipes 31 are unlikely to become starting points of uneven wear, and thus suppress a decrease in uneven wear resistance.

In the first middle land portion 11, the multiple first middle sipes 33 are provided. Each of the first middle sipes 33 connects the first crown main groove 3 and the first shoulder main groove 5 and extends in the tire axial direction while being curved in an arc shape. The first middle sipes 33 each have a width of less than 2 mm. Similar to the first crown sipes 31, such first middle sipes 33 improve wet performance by achieving an edge effect, and suppress a decrease in rigidity of the first middle land portion 11 by being closed on a tread surface when a normal load is loaded. As a result, steering stability is improved. Further, a decrease in uneven wear resistance is suppressed.

In the first shoulder land portion 13, the multiple first shoulder sipes 35 are provided. Each of the first shoulder sipes 35 extends in the tire axial direction from the first shoulder main groove 5 toward the first tread ground contact edge (Te1) while being curved in an arc shape. The first shoulder sipes 35 each extend beyond the first tread ground contact edge (Te1) to a tire axial direction outer side. Due to such first shoulder sipes 35, wet performance of the pneumatic tire is further improved.

The first shoulder sipes 35 each have a width of less than 2 mm. Similar to the first crown sipes 31, such first shoulder sipes 35 improve wet performance by achieving an edge effect, and suppress a decrease in rigidity of the first shoulder land portion 13 by being closed on a tread surface when a normal load is loaded. As a result, steering stability is improved. Further, a decrease in uneven wear resistance is suppressed.

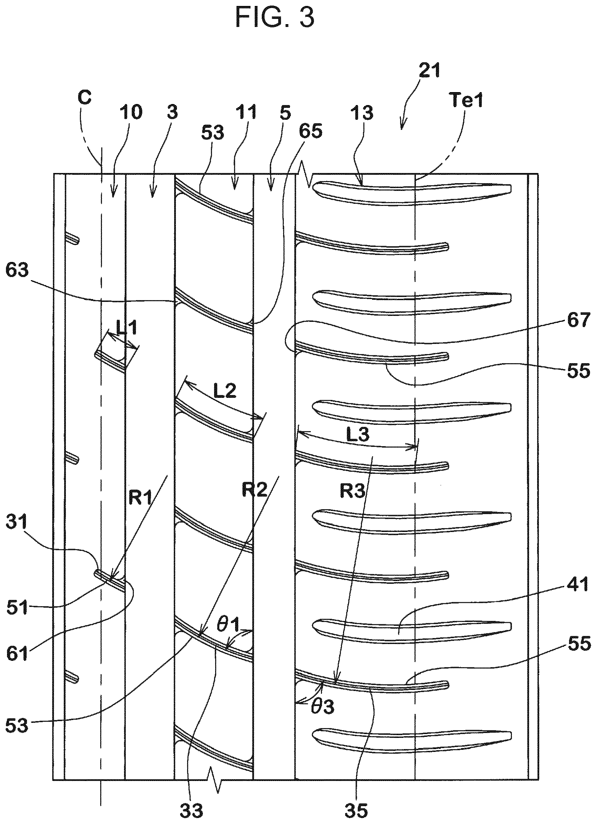

Fig. 3 illustrated the first tread half 21. Each of the first crown sipes 31, each of the first middle sipes 33 and each of the first shoulder sipes 35 are respectively formed in arc shapes of curvature radii (R1, R2, R3) that are convex on one side of the tire circumferential direction (lower side in Fig. 3). The first crown sipes 31, the first middle sipes 33 and the first shoulder sipes 35 each gradually increase an angle with respect to the tire circumferential direction from the tire equator (C) toward the first tread ground contact edge (Te1). Due to such first crown sipes 31, first middle sipes 33 and first shoulder sipes 35, tire axial direction rigidity of the tread part 2 is gradually increased from the tire equator (C) toward the first tread ground contact edge (Te1), which contributes to improvement in steering stability.

The curvature radii (R1, R2, R3) satisfy the following relations:

$$R1 \leqq R2 \leqq R3$$

$$R1 < R3$$

That is, the curvature radii of the sipes (31, 33, 35) are increased from the tire equator (C) toward the first tread ground contact edge (Te1). As a result, from the tire equator (C) toward the first tread ground contact edge (Te1), a decrease in torsional rigidity of the land portions (10, 11, 13) is suppressed, and uneven wear such as so-called shoulder wear in the shoulder land portion 13 is suppressed, and at the same time, transient characteristics during cornering are improved and steering stability of the pneumatic tire is improved.

The first crown sipes 31 are respectively smoothly continuous to the first middle sipes 33 via the first crown main groove 3. On the other hand, the first middle sipes 33 and the first shoulder sipes 35 are formed at positions such that the first middle sipes 33 are respectively smoothly continuous to the first shoulder sipes 35 via the first shoulder main groove 5. As a result, along the sipes (31, 33, 35), rigidity distribution and ground contact pressure distribution of the land portions (10, 11, 13) are smooth, and uneven wear is further suppressed. Further, transient characteristics during cornering are improved and steering stability of the pneumatic tire is improved.

The first crown sipes 31 each extend from the crown main groove 3 of the first tread half 21 to beyond the tire equator (C) and are each terminated within the crown land portion 10 without reaching the crown main groove 4 on the other side. Such first crown sipes 31 suppress a decrease in the rigidity of the crown land portion 10 while ensuring a good edge effect in the crown land portion 10 in the first tread half 21. As a result, steering stability is improved. Further, uneven wear resistance is further improved.

A length (L1) of each of the first crown sipes 31 is desirably 70% - 100% of the width (W1) of the first crown main groove 3. When the length (L1) is less than 70% of the width (W1), there is a risk that the edge effect of the first crown sipes 31 may be insufficient and wet performance cannot be sufficiently improved. On the other hand, when the length (L1) exceeds 100% of the width (W1), there is a risk that the rigidity of the crown land portion 10 may be insufficient and steering stability and uneven wear resistance may be affected.

The length (L1) of each of the first crown sipes 31 is desirably less than 50% of a tire axial direction length of the crown land portion 10. When the length (L1) exceeds 50% of the tire axial direction length of the crown land portion 10, there is a risk that the rigidity of the crown land portion 10 may be insufficient and steering stability and uneven wear resistance may be affected.

A length (L2) of each of the first middle sipes 33 is larger than the length (L1) of each of the first crown sipes 31, and a length (L3) of each of the first shoulder sipes 35 is larger than the length (L2) of each of the first middle sipes 33. Due to such first crown sipes 31, first middle sipes 33 and first shoulder sipes 35, rigidities of the crown land portion 10, the first middle land portion 11 and the first shoulder land portion 13 are optimized and steering stability is improved. Further, uneven wear is further suppressed.

A tire axial direction length of the second middle land portion 12 is desirably equal to or larger than a tire axial direction length of the first middle land portion 11. A tire axial direction length of the second shoulder land portion 14 is desirably equal to or larger than a tire axial direction length of the first shoulder land portion 13. Due to such second middle land portion 12 and second shoulder land portion 14, rubber volumes of the second middle land portion 12 and the second shoulder land portion 14 can be easily ensured and uneven wear resistance can be easily improved.

In the crown land portion 10, the multiple second crown sipes 32 are provided. Each of the second crown sipes 32 extends in the tire axial direction from the second crown main groove 4 toward the tire equator (C) while being linearly inclined. It is also possible that the second crown sipes 32 are each formed in an arc shape.

The second crown sipes 32 and the first crown sipes 31 are alternately formed in the tire circumferential direction. As a result, rigidity distribution of the crown land portion 10 is made uniform, and steering stability and uneven wear resistance are improved. The second crown sipes 32 each have a width of less than 2 mm. Similar to the first crown sipes 31, such second crown sipes 32 improve wet performance by achieving an edge effect, and suppress a decrease in the rigidity of the crown land portion 10 by being closed when a normal load is loaded, and thus, decreases in steering stability and uneven wear resistance are suppressed.

In the second middle land portion 12, the multiple second middle sipes 34 are provided. Each of the second middle sipes 34 connects the second crown main groove 4 and the second shoulder main groove 6 and extends in the tire axial direction while being curved in an arc shape. The second middle sipes 34 each have a width of less than 2 mm. Similar to the first crown sipes 31, such second middle sipes 34 improve wet performance by achieving an edge effect, and suppress a decrease in the rigidity of the second middle land portion 12 by being closed when a normal load is loaded, and thus, decreases in steering stability and uneven wear resistance are suppressed.

In the second shoulder land portion 14, the multiple second shoulder sipes 36 are provided. Each of the second shoulder sipes 36 extends in the tire axial direction from the second shoulder main groove 6 toward the second tread ground contact edge (Te2) while being curved in an arc shape. The second shoulder sipes 36 each extend from the second shoulder main groove 6 and are each terminated within the second shoulder land portion 14 without reaching the second tread ground contact edge (Te2). Such second shoulder sipes 36 suppress a decrease in tire circumferential direction rigidity of the second shoulder land portion 14, and further improve steering stability and uneven wear resistance.

The second shoulder sipes 36 each have a width of less than 2 mm. Similar to the first crown sipes 31, such second shoulder sipes 36 improve wet performance by achieving an edge effect, and suppress a decrease in the rigidity of the second shoulder land portion 14 by being closed when a normal load is loaded, and thus, decreases in steering stability and uneven wear resistance are suppressed.

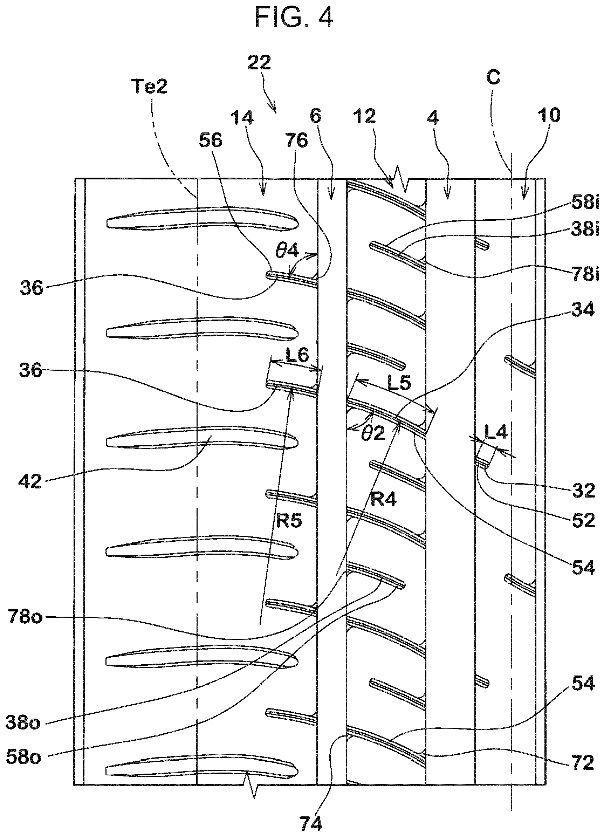

Fig. 4 illustrated the second tread half 22. Each of the second middle sipes 34 and each of the second shoulder sipes 36 are respectively formed in arc shapes of curvature radii (R4, R5) that are convex on the other side of the tire circumferential direction (upper side in Fig. 4). The second middle sipes 34 and the second shoulder sipes 36 each gradually increase an angle with respect to the tire circumferential direction from the tire equator (C) toward the second tread ground contact edge (Te2). Due to such second middle sipes 34 and second shoulder sipes 36, the tire axial direction rigidity of the tread part 2 is gradually increased from the tire equator (C) toward the second tread ground contact edge (Te2), which contributes to improvement in steering stability.

The curvature radii (R4, R5) satisfy the following relation:

$$R4 \leqq R5$$

As a result, from the tire equator (C) toward the second tread ground contact edge (Te2), a decrease in torsional rigidity of the land portion (12, 14) is suppressed, and steering stability is improved and uneven wear such as so-called shoulder wear in the shoulder land portion 14 is suppressed.

The second crown sipes 32 are respectively smoothly continuous to some of the second middle sipes 34 via the second crown main groove 4. On the other hand, the second middle sipes 34 and the second shoulder sipes 36 are formed at positions such that the second middle sipes 34 are respectively smoothly continuous to the second shoulder sipes 36 via the second shoulder main groove 6. As a result, along the sipes (32, 34, 36), rigidity distribution and ground contact pressure distribution of the land portions (10, 12, 14) are smooth, and uneven wear is further suppressed. Further, transient characteristics during cornering are improved and steering stability of the pneumatic tire is improved.

The first crown sipes 31 and the second middle sipes 34 are formed as positions such that the first crown sipes 31 are respectively smoothly continuous to some of the second middle sipes 34 via the crown land portion 10 and the second crown main groove 4. As a result, over the entire tread part 2, along the sipes (35, 33, 31, 34, 36), rigidity distribution and ground contact pressure distribution of the land portions (13, 11, 10, 12, 14) are smooth, and uneven wear is further suppressed. Further, transient characteristics during cornering are improved and steering stability of the pneumatic tire is improved.

The second crown sipes 32 each extend from the second crown main groove 3 of the second tread half 22 and are each terminated within the crown land portion 10 without reaching the tire equator (C). Such second crown sipes 32, together with the first crown sipes 31, ensure a good edge effect at the crown land portion 10 of the second tread half 22 and suppress a decrease in the rigidity of the crown land portion 10, and further improve steering stability and uneven wear resistance.

A length (L4) of each of the second crown sipes 32 is desirably 20% - 40% of the width (W2) of the second crown main groove 4. When the length (L4) is less than 20% of the width (W2), there is a risk that the edge effect of the second crown sipes 32 may be insufficient and wet performance cannot be sufficiently improved. On the other hand, when the length (L4) exceeds 40% of the width (W2), there is a risk that the rigidity of the crown land portion 10 may be insufficient and steering stability and uneven wear resistance may be affected.

The length (L4) of each of the second crown sipes 32 is desirably less than 25% of the tire axial direction length of the crown land portion 10. When the length (L4) exceeds 25% of the tire axial direction length of the crown land portion 10, there is a risk that the rigidity of the crown land portion 10 may be insufficient and steering stability and uneven wear resistance may be affected.

A length (L5) of each of the second middle sipes 34 is larger than the length (L4) of each of the second crown sipes 32, and a length (L6) of each of the second shoulder sipes 36 is smaller than the length (L5) of each of the second middle sipes 34. Due to such second crown sipes 32, second middle sipes 34 and second shoulder sipes 36, rigidities of the crown land portion 10, the second middle land portion 12 and the second shoulder land portion 14 are optimized and uneven wear is further suppressed.

The length (L6) of each of the second shoulder sipes 36 is desirably 50 - 55% of the tire axial direction length of the second shoulder land portion 14. When the length (L6) is less than 50% of the tire axial direction length of the second shoulder land portion 14, there is a risk that the edge effect due to the second shoulder sipes 36 may be insufficient and wet performance may be affected. On the other hand, when the length (L6) exceeds 55% of the tire axial direction length of the second shoulder land portion 14, there is a risk that the rigidity of the second shoulder land portion 14 may be insufficient and steering stability and uneven wear resistance may be affected.

As illustrated in Fig. 3, in the first shoulder land portion 13, first shoulder lug grooves 41 are provided such that each extends from the first tread ground contact edge (Te1) toward a tire axial direction inner side. Due to the first shoulder lug grooves 41, drainage performance of the first shoulder land portion 13 is improved. The first shoulder lug grooves 41 each extend beyond the first tread ground contact edge (Te1) to a tire axial direction outer side. It is desirable that the first shoulder lug grooves 41 each have a groove width of 2 mm or more. Due to such first shoulder lug grooves 41, wet performance of the pneumatic tire is further improved.

The first shoulder lug grooves 41 are each terminated within the first shoulder land portion 13 without reaching the first shoulder main groove 5. Such first shoulder lug grooves 41 suppress a decrease in tire circumferential direction rigidity of the first shoulder land portion 13, and further improve steering stability and uneven wear resistance. The first shoulder lug grooves 41 and the first shoulder sipes 35 are alternately formed in the tire circumferential direction. As a result, rigidity distribution of the first shoulder land portion 13 is made uniform, and steering stability and uneven wear resistance are improved.

The first shoulder lug grooves 41 each have linear portion (41a) that linearly extends from the first tread ground contact edge (Te1) at an angle of 85 - 95 degrees with respect to the tire circumferential direction, and a curved portion (41b) that extends in an arc shape along the first shoulder sipes 35. Drainage performance during cornering is improved due to the linear portion (41a), and transient characteristics during cornering are improved due to the curved portion (41b).

As illustrated in Fig. 4, in the second shoulder land portion 14, second shoulder lug grooves 42 are provided such that each extends from the second tread ground contact edge (Te2) toward a tire axial direction inner side. Due to the second shoulder lug grooves 42, drainage performance of the second shoulder land portion 14 is improved. The second shoulder lug grooves 42 each extend beyond the second tread ground contact edge (Te2) to a tire axial direction outer side. It is desirable that the second shoulder lug grooves 42 each have a groove width of 2 mm or more. Due to such second shoulder lug grooves 42, wet performance of the pneumatic tire is further improved.

The second shoulder lug grooves 42 are each terminated within the second shoulder land portion 14 without reaching the second shoulder main groove 6. Such second shoulder lug grooves 42 suppress a decrease in tire circumferential direction rigidity of the second shoulder land portion 14, and further improve steering stability and uneven wear resistance. The second shoulder lug grooves 42 and the second shoulder sipes 36 are alternately formed in the tire circumferential direction. As a result, rigidity distribution of the second shoulder land portion 14 is made uniform, and steering stability and uneven wear resistance are improved. The second shoulder sipes 36 are each terminated on a tire axial direction inner side of a tire axial direction outer side edge of a curved portion of each of the second shoulder lug grooves 42. As a result, rigidity of the second shoulder land portion 14 near the second tread ground contact edge (Te2) is increased, and steering stability and uneven wear resistance are improved.

The second shoulder lug grooves 42 each have linear portion (42a) that linearly extends from the second tread ground contact edge (Te2) at an angle of 85 - 95 degrees with respect to the tire circumferential direction, and a curved portion (42b) that extends in an arc shape along the second shoulder sipes 36. Drainage performance during cornering is improved due to the linear portion (42a), and transient characteristics during cornering are improved due to the curved portion (42b).

In the present embodiment, the third sipes 38 include third inner side sipes (38i) and third outer side sipes (38o). That is, in the second middle land portion 12, the third inner side sipes (38i) that each extend from the second crown main groove 4 to a tire axial direction outer side and the third outer side sipes (38o) that each extend from the second shoulder main groove 6 to a tire axial direction inner side are formed. The third inner side sipes (38i) and the third outer side sipes (38o) each have a width of less than 2 mm. The third inner side sipes (38i) and the third outer side sipes (38o) achieve an edge effect and improve wet performance of the pneumatic tire.

The third inner side sipes (38i) are each terminated within the second middle land portion 12 without reaching the second shoulder main groove 6. The third outer side sipes (38o) are each terminated within the second middle land portion 12 without reaching the second crown main groove 4. A tire axial direction length of each of the third inner side sipes (38i) and the third outer side sipes (38o) is desirably 50% - 80% of a width (tire axial direction length) of the second middle land portion 12. The third inner side sipes (38i) and the third outer side sipes (38o) are alternately formed in the tire circumferential direction with the second middle sipes 34 respectively interposed therebetween. Due to such third inner side sipes (38i) and third outer side sipes (38o), a sufficient edge effect is obtained and a decrease in the rigidity of the second middle land portion 12 is suppressed, and steering stability and uneven wear resistance are improved.

A ratio (W4/W2) of the width (W4) of the second shoulder main groove 6 to the width (W2) of the second crown main groove 4 is desirably 0.10 - 0.60. When the ratio (W4/W2) is less than 0.10, there is a risk that drainage performance of the second shoulder main groove 6 may be affected. Further, there is a risk that the rubber volumes of the crown land portion 10 and the second middle land portion 12 may be insufficient and uneven wear resistance may be affected. When the ratio (W4/W2) exceeds 0.60, there is a risk that drainage performance of the second crown main groove 4 may be affected. Further, there is a risk that the rubber volumes of the second middle land portion 12 and the second shoulder land portion 14 may be insufficient and uneven wear resistance may be affected.

A ratio (W3/W1) of the width (W3) of the first shoulder main groove 5 to the width (W1) of the first crown main groove 3 is desirably 0.80 - 1.00. When the ratio (W3/W1) is less than 0.80, there is a risk that drainage performance of the first shoulder main groove 5 may be affected. Further, there is a risk that the rubber volumes of the crown land portion 10 and the first middle land portion 11 may be insufficient and uneven wear resistance may be affected. When the ratio (W3/W1) exceeds 1.00, there is a risk that drainage performance of the first crown main groove 3 may be affected. Further, there is a risk that the rubber volumes of the first middle land portion 11 and the first shoulder land portion 13 may be insufficient and uneven wear resistance may be affected.

A ratio (W3/W4) of the width (W3) of the first shoulder main groove 5 to the width (W4) of the second shoulder main groove 6 is desirably 1.40 - 1.60. When the ratio (W3/W4) is less than 1.40, there is a risk that drainage performance of the first shoulder main groove 5 may be affected. Further, there is a risk that the rubber volumes of the second middle land portion 12 and the second shoulder land portion 14 may be insufficient and uneven wear resistance may be affected. When the ratio (W3/W4) exceeds 1.60, there is a risk that drainage performance of the second shoulder main groove 6 may be affected. Further, there is a risk that the rubber volumes of the first middle land portion 11 and the first shoulder land portion 13 may be insufficient and uneven wear resistance may be affected.

A difference (R5 - R4) between the curvature radius (R5) of the second shoulder sipes 36 and the curvature radius (R4) of the second middle sipes 34 is desirably smaller than a difference (R3 - R2) between the curvature radius (R3) of the first shoulder sipes 35 and the curvature radius (R2) of the first middle sipes 33. In the second tread half 22 where a large load is applied during cornering, by setting the curvature radius difference (R5 - R4) small, transient characteristics during cornering are improved and steering stability is improved.

As illustrated in Fig. 3, an angle ($\theta1$) of each of the first middle sipes 33 with respect to the tire circumferential direction at an end on the first shoulder main groove 5 side is desirably 71 - 78 degrees. When the angle ($\theta1$) is less than 71 degrees, there is a risk that tire axial direction rigidity of the first middle land portion 11 may be insufficient and steering stability may be affected. When the angle ($\theta1$) exceeds 78 degrees, there is a risk that heel-and-toe wear may occur at the first middle land portion 11. Similarly, as illustrated in Fig. 4, an angle ($\theta2$) of each of the second middle sipes 34 with respect to the tire circumferential direction at an end on the second shoulder main groove 6 side is desirably 73 - 80 degrees. Further, in order to suppress the heel-and-toe wear at the first middle land portion 11, the angle ($\theta1$) is desirably set to be smaller than the angle ($\theta2$).

As illustrated in Fig. 3, an angle ($\theta3$) of each of the first shoulder sipes 35 with respect to the tire circumferential direction at an end on the first shoulder main groove 5 side is desirably 71 - 78 degrees. When the angle ($\theta3$) is less than 71 degrees, there is a risk that tire axial direction rigidity of the first shoulder land portion 13 may be insufficient and steering stability may be affected. When the angle ($\theta3$) exceeds 78 degrees, there is a risk that heel-and-toe wear may occur at the first shoulder land portion 13. Similarly, as illustrated in Fig. 4, an angle ($\theta4$) of each of the second shoulder sipes 36 with respect to the tire circumferential direction at an end on the second shoulder main groove 6 side is desirably 73 - 80 degrees. Further, in order to suppress the heel-and-toe wear at the first shoulder land portion 13, the angle ($\theta3$) is desirably set to be smaller than the angle ($\theta4$).

As illustrated in Fig. 3 and 4, it is desirable that first crown shallow grooves 51 and second crown shallow grooves 52 each having a width of less than 2 mm be provided in the crown land portion 10. It is desirable that the first crown shallow grooves 51 and the second crown shallow grooves 52 each have a depth of less than 2 mm. The first crown shallow grooves 51 respectively partially include the first crown sipes 31 and are respectively formed along the first crown sipes 31. In other words, the first crown sipes 31 are respectively formed from groove bottoms of the first crown shallow grooves 51 in a thickness direction of the tread part 2. Relationship between the second crown shallow grooves 52 and the second crown sipes 32 is similar to the relationship between the first crown shallow grooves 51 and the first crown sipes 31.

By providing the first crown shallow grooves 51 and the second crown shallow grooves 52 in the crown land portion 10, drainage performance of the crown land portion 10 is improved and wet performance is improved. Further, since the width and the depth of each of the first crown shallow grooves 51 and the second crown shallow grooves 52 are less than 2 mm, influence on uneven wear resistance is limited. The above-described edge effects of the first crown sipes 31 and the second crown sipes 32 are obtained after the first crown shallow grooves 51 and the second crown shallow grooves 52 disappear as the crown land portion 10 wears out.

It is desirable that first middle shallow grooves 53 each having a width of less than 2 mm be provided in the first middle land portion 11, and second middle shallow grooves 54, third middle shallow grooves (58i) and fourth middle shallow grooves (58o), each having a width of less than 2 mm, be provided in the second middle land portion 12. It is desirable that the first middle shallow grooves 53, and the second middle shallow grooves 54, the third middle shallow grooves (58i) and the fourth middle shallow grooves (58o), each have a depth of less than 2 mm. The first middle shallow grooves 53 respectively partially include the first middle sipes 33 and are respectively formed along the first middle sipes 33. In other words, the first middle sipes 33 are respectively formed from groove bottoms of the first middle shallow grooves 53 in the thickness direction of the tread part 2. Relationship between the second middle shallow grooves 54 and the second middle sipes 34, relationship between the third middle shallow grooves (58i) and the third inner side sipes (38i) and relationship between the fourth middle shallow grooves (58o) and the third outer side sipes (38o) are similar to the relationship between the first middle shallow grooves 53 and the first middle sipes 33.

By providing the first middle shallow grooves 53 in the first middle land portion 11 and providing the second middle shallow grooves 54, the third middle shallow grooves (58i) and the fourth middle shallow grooves (58o) in the second middle land portion 12, drainage performance of the first middle land portion 11 and the second middle land portion 12 is improved, and wet performance is improved. Further, since the width and the depth of each of the first middle shallow grooves 53, the second middle shallow grooves 54, the third middle shallow grooves (58i) and the fourth middle shallow grooves (58o) are less than 2 mm, influence on uneven wear resistance is limited. The above-described edge effects of the first middle sipes 33, the second middle sipes 34, the third inner side sipes (38i) and the third outer side sipes (38o) are obtained after the first middle shallow grooves 53, the second middle shallow grooves 54, the third middle shallow grooves (58i) and the fourth middle shallow grooves (58o) disappear as the first middle land portion 11 and the second middle land portion 12 wear out.

It is desirable that first shoulder shallow grooves 55 each having a width of less than 2 mm be provided in the first shoulder land portion 13, and second shoulder shallow grooves 56 each having a width of less than 2 mm be provided in the second shoulder land portion 14. It is desirable that the first shoulder shallow grooves 55 and the second shoulder shallow grooves 56 each have a depth of less than 2 mm. The first shoulder shallow grooves 55 respectively partially include the first shoulder sipes 35 and are respectively formed along the first shoulder sipes 35. In other words, the first shoulder sipes 35 are respectively formed from groove bottoms of the first shoulder shallow grooves 55 in the thickness direction of the tread part 2. Relationship between the second shoulder shallow grooves 56 and the second shoulder sipes 36 is similar to the relationship between the first shoulder shallow grooves 55 and the first shoulder sipes 35.

By providing the first shoulder shallow grooves 55 in the first shoulder land portion 13 and providing the second shoulder shallow grooves 56 in the second shoulder land portion 14, drainage performance of the first shoulder land portion 13 and the second shoulder land portion 14 is improved, and wet performance is improved. Further, since the width and the depth of each of the first shoulder shallow grooves 55 and the second shoulder shallow grooves 56 are less than 2 mm, influence on uneven wear resistance is limited. The above-described edge effects of the first shoulder sipes 35 and the second shoulder sipes 36 are obtained after the first shoulder shallow grooves 55 and second shoulder shallow grooves 56 disappear as the first shoulder land portion 13 and the second shoulder land portion 14 wear out.

As illustrated in Fig. 3, chamfered portions 61 each having an arc shape are respectively formed at front end portions of the crown land portion 10 where the first crown shallow grooves 51 are communicatively connected to the first crown main groove 3. The chamfered portions 61 are respectively formed at places where groove edges of the first crown shallow grooves 51 intersect a groove edge of the first crown main groove 3 at an acute angle. Due to the chamfered portions 61, drainage performance of the first crown shallow grooves 51 is improved.

Chamfered portions 63 each having an arc shape are respectively formed at front end portions of the first middle land portion 11 where the first middle shallow grooves 53 are communicatively connected to the first crown main groove 3. Chamfered portions 65 each having an arc shape are respectively formed at front end portions of the first middle land portion 11 where the first middle shallow grooves 53 are communicatively connected to the first shoulder main groove 5. The chamfered portions 63 are respectively formed at places where groove edges of the first middle shallow grooves 53 intersect a groove edge of the first crown main groove 3 at an acute angle. The chamfered portions 65 are respectively formed at places where groove edges of the first middle shallow grooves 53 intersect a groove edge of the first shoulder main groove 5 at an acute angle. Due to the chamfered portions (63, 65), drainage performance of the first middle shallow grooves 53 is improved.

Chamfered portions 67 each having an arc shape are respectively formed at front end portions of the first shoulder land portion 13 where the first shoulder shallow grooves 55 are communicatively connected to the first shoulder main groove 5. The chamfered portions 67 are respectively formed at places where groove edges of the first shoulder shallow grooves 55 intersect a groove edge of the first shoulder main groove 5 at an acute angle. Due to the chamfered portions 67, drainage performance of the first shoulder shallow grooves 55 is improved.

As illustrated in Fig. 4, chamfered portions 72 each having an arc shape are respectively formed at front end portions of the second middle land portion 12 where the second middle shallow grooves 54 are communicatively connected to the second crown main groove 4. Chamfered portions 74 each having an arc shape are respectively formed at front end portions of the second middle land portion 12 where the second middle shallow grooves 54 are communicatively connected to the second shoulder main groove 6. The chamfered portions 72 are respectively formed at places where groove edges of the second middle shallow grooves 54 intersect a groove edge of the second crown main groove 4 at an acute angle. The chamfered portions 74 are respectively formed at places where groove edges of the second middle shallow grooves 54 intersect a groove edge of the second shoulder main groove 6 at an acute angle. Due to the chamfered portions (72, 74), drainage performance of the second middle shallow grooves 54 is improved.

Chamfered portions (78i) each having an arc shape are respectively formed at front end portions of the second middle land portion 12 where the third middle shallow grooves (58i) are communicatively connected to the second crown main groove 4. Chamfered portions (78o) each having an arc shape are respectively formed at front end portions of the second middle land portion 12 where the fourth middle shallow grooves (58o) are communicatively connected to the second shoulder main groove 6. The chamfered portions (78i) are respectively formed at places where groove edges of the third middle shallow grooves (58i) intersect a groove edge of the second crown main groove 4 at an acute angle. The chamfered portions (78o) are respectively formed at places where groove edges of the fourth middle shallow grooves (58o) intersect a groove edge of the second shoulder main groove 6 at an acute angle. Due to the chamfered portions (78i, 78o), drainage performance of the third middle shallow grooves (58i) and the fourth middle shallow grooves (58o) is improved.

Chamfered portions 76 each having an arc shape are respectively formed at front end portions of the second shoulder land portion 14 where the second shoulder shallow grooves 56 are communicatively connected to the second shoulder main groove 6. The chamfered portions 76 are respectively formed at places where groove edges of the second shoulder shallow grooves 56 intersect a groove edge of the second shoulder main groove 6 at an acute angle. Due to the chamfered portions 76, drainage performance of the second shoulder shallow grooves 56 is improved.

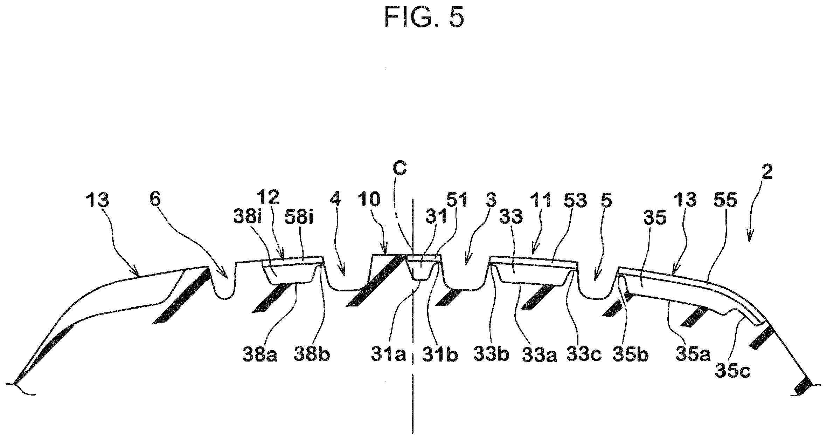

Fig. 5 is a cross-sectional view along a B-B line of the tread part 2 in Fig. 1. The first crown sipes 31, the first middle sipes 33 and the first shoulder sipes 35 each have a depth that varies along the tire axial direction.

The first crown sipes 31 each have a deep portion (31a) at a central portion of the crown land portion 10 and a shallow portion (31b) on the first crown main groove 3 side. The depth of each of the first crown sipes 31 linearly varies between the deep portion (31a) and the shallow portion (31b). Due to the shallow portion (31b), tire circumferential direction rigidity of the crown land portion 10 is increased, and uneven wear such as heel-and-toe wear is suppressed. On the other hand, the deep portion (31a) remains in the central portion of the crown land portion 10 from an intermediate stage to a terminal stage of wear and allows excellent wet performance to be maintained.

The first middle sipes 33 each have a deep portion (33a) at a central portion of the first middle land portion 11, a shallow portion (33b) on the first crown main groove 3 side, and a shallow portion (33c) on the first shoulder main groove 5 side. The depth of each of the first middle sipes 33 linearly varies between the deep portion (33a) and the shallow portions (33b, 33c). Due to the shallow portions (33b, 33c), tire circumferential direction rigidity of the first middle land portion 11 is increased, and uneven wear such as heel-and-toe wear is suppressed. On the other hand, the deep portion (33a) remains in the central portion of the first middle land portion 11 from an intermediate stage to a terminal stage of wear and allows excellent wet performance to be maintained.

The first shoulder sipes 35 each have a deep portion (35a) at a central portion of the first shoulder land portion 13, a shallow portion (35b) on the first shoulder main groove 5 side, and a shallow portion (35c) on a tire axial direction outer side of the first tread ground contact edge (Te1. The depth of each of the first shoulder sipes 35 linearly varies between the deep portion (35a) and the shallow portions (35b, 35c). Due to the shallow portions (35b, 35c), tire circumferential direction rigidity of the first shoulder land portion 13 is increased, and uneven wear such as heel-and-toe wear is suppressed. On the other hand, the deep portion (35a) remains in the central portion of the first shoulder land portion 13 from an intermediate stage to a terminal stage of wear and allows excellent wet performance to be maintained.

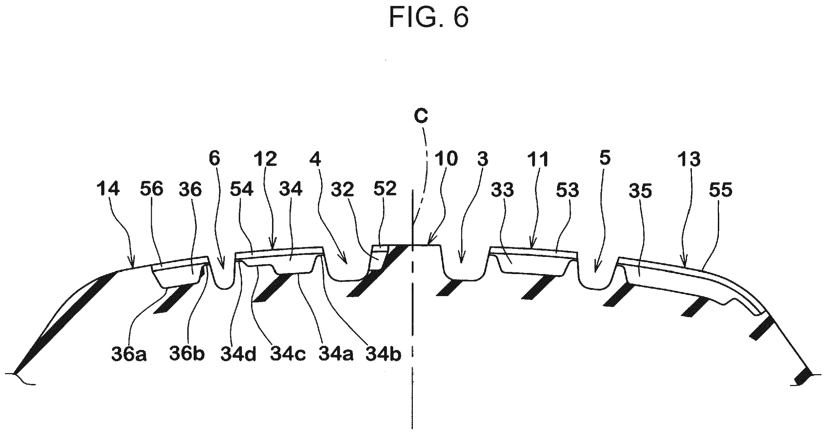

Fig. 6 is a cross-sectional view along a C-C line of the tread part 2 in Fig. 1. The second middle sipes 34 and the second shoulder sipes 36 each have a depth that varies along the tire axial direction.

The second middle sipes 34 each have a deep portion (34a) at a central portion of the second middle land portion 12, a shallow portion (34b) on the second crown main groove 4 side, and shallow portions (34c, 34d) on the second shoulder main groove 6 side. The shallow portion (34c) has a depth larger than that of the shallow portion (34d). The depth of each of the second middle sipes 34 linearly varies between the deep portion (34a) and the shallow portions (34b, 34c) and between the shallow portion (34c) and the shallow portion (34d). Due to the shallow portions (34b, 34c, 34d), tire circumferential direction rigidity of the second middle land portion 12 is increased, and uneven wear such as heel-and-toe wear is suppressed. Further, by providing the shallow portion (34c) on the second shoulder main groove 6 side, the depth of each of the second middle sipes 34 varies stepwise. Therefore, tire circumferential direction rigidity distribution of the second middle land portion 12 varies stepwise, and transient characteristics during cornering are improved. On the other hand, the deep portion (34a) remains in the central portion of the second middle land portion 12 from an intermediate stage to a terminal stage of wear and allows excellent wet performance to be maintained.

The second shoulder sipes 36 each have a deep portion (36a) at a central portion of the second shoulder land portion 14 and a shallow portion (36b) on the second shoulder main groove 6 side. The depth of each of the second shoulder sipes 36 linearly varies between the deep portion (36a) and the shallow portion (36b). Due to the shallow portion (36b), tire circumferential direction rigidity of the second shoulder land portion 14 is increased, and uneven wear such as heel-and-toe wear is suppressed. On the other hand, the deep portion (36a) remains in the central portion of the second shoulder land portion 14 from an intermediate stage to a terminal stage of wear and allows excellent wet performance to be maintained.

As illustrated in Fig. 5, the third inner side sipes (38i) each have a depth that varies along the tire axial direction. The third inner side sipes (38i) each have a deep portion (38a) at a central portion of the second middle land portion 12 and a shallow portion (38b) on the second crown main groove 4 side. The depth of each of the third inner side sipes (38i) linearly varies between the deep portion (38a) and the shallow portion (38b). Due to the shallow portion (38b), tire circumferential direction rigidity of the second middle land portion 12 is increased, and uneven wear such as heel-and-toe wear is suppressed. On the other hand, the deep portion (38a) remains in the central portion of the second middle land portion 12 from an intermediate stage to a terminal stage of wear and allows excellent wet performance to be maintained.

As illustrated in Fig. 2, the third outer side sipes (38o) each have a depth that varies along the tire axial direction. The third outer side sipes (38o) each have a deep portion (38c) at a central portion of the second middle land portion 12 and a shallow portion (38d) on the second shoulder main groove 6 side. The depth of each of the third outer side sipes (38o) linearly varies between the deep portion (38c) and the shallow portion (38d). Due to the shallow portion (38d), tire circumferential direction rigidity of the second middle land portion 12 is increased, and uneven wear such as heel-and-toe wear is suppressed. On the other hand, the deep portion (38c) remains in the central portion of the second middle land portion 12 from an intermediate stage to a terminal stage of wear and allows excellent wet performance to be maintained.

As illustrated in Fig. 1, 3 and 5, it is desirable that a distance from the tire equator (C) to a center line of the first crown main groove 3 be smaller than a distance from the tire equator (C) to a center line of the second crown main groove 4, and a distance from the tire equator (C) to a center line of the first shoulder main groove 5 be smaller than a distance from the tire equator (C) to a center line of the second shoulder main groove 6. Along with this, a center line of the crown land portion 10 is positioned in the second tread half 22, and, coupled with first crown shallow grooves 51, water on the tread surface of the crown land portion 10 during traveling on a wet road surface is likely to be discharged to the first crown main groove 3.

Examples

Pneumatic tires each having a size of 215/60R16 and a basic tread pattern of Fig. 1 are prototyped based on specifications shown in Table 1 and steering stability is tested. A test method is as follows.

Steering Stability

The prototyped tires mounted on a rim of 16 × 7.0J are mounted on all wheels of a passenger FR car having a displacement of 2500 cc under a condition of an internal pressure of 250 kPa, and the FR car is driven by one driver on a test course of a dry asphalt road surface, and characteristics about grip performance, steering response, and responsiveness are evaluated based on sensory evaluation by the driver. The result is a score with a result of Example 1 as 100. A larger score indicates a better steering stability.

Table 1

| | Comparative Example 1 | Comparative Example 2 | Comparative Example 3 | Comparative Example 4 | Example 1 | Example 2 |
|---|---|---|---|---|---|---|
| Width (mm) of first sipes | 0.5 | 0.5 | 0.5 | 2.0 | 0.5 | 1.0 |
| Width (mm) of second sipes | 0.5 | 0.5 | 0.5 | 2.0 | 0.5 | 1.0 |
| Shape of first sipes | Discontinuous | Discontinuous | Smoothly continuous | Smoothly continuous | Smoothly continuous | Smoothly continuous |
| Shape of second sipes | Discontinuous | Discontinuous | Smoothly continuous | Smoothly continuous | Smoothly continuous | Smoothly continuous |
| Terminating position of second sipes | Second tread ground contact edge | Second shoulder land portion | Second tread ground contact edge | Second shoulder land portion | Second shoulder land portion | Second shoulder land portion |
| Third sipes | None | Yes | None | Yes | Yes | Yes |
| Steering stability (score) | 80 | 90 | 90 | 75 | 100 | 95 |

As is apparent from Table 1, it can be confirmed that the pneumatic tires of the examples allow steering stability to be significantly improved as compared to the comparative examples.

For a purpose of improving steering stability, Japanese Patent Laid-Open Publication No. 2014-184828 describes a pneumatic tire in which main grooves each continuously extending in a tire circumferential direction are respectively provided on a tire equator and on both sides of the tire equator. In this pneumatic tire, grooves each having a large width are not provided in middle land portions, and thereby, rigidity of the middle land portions is increased and steering stability is improved.

In the above-described pneumatic tire, due to arc-shaped sipes provided in the middle land portions and shoulder land portions, a decrease in pattern rigidity is suppressed and a load is dispersed in multiple directions, and steering stability is improved. However, the sipes provided in the middle land portions and the sipes provided in the shoulder land portions have different inclinations with respect to the tire circumferential direction and are discontinuous to each other. Therefore, on a tread surface, the middle land portions and the shoulder land portions deform in different modes. Therefore, there is a risk that transient characteristics during cornering, in which a center of the tread surface (a place where a ground contact pressure is the highest) moves from a central portion of the tread toward a shoulder land portion, may be affected.

A pneumatic tire according to an embodiment of the present invention improves transient characteristics during cornering and provides good steering stability.

A pneumatic tire according to an embodiment of the present invention includes, in a tread part: a pair of crown main grooves that are respectively formed on both outer sides of a tire equator and each continuously extend in a tire circumferential direction; a pair of shoulder main grooves that are respectively formed on tire axial direction outer sides of the crown main grooves and each continuously extend in the tire circumferential direction; a crown land portion between the pair of the crown main grooves; a pair of middle land portions between the crown main grooves and the shoulder main grooves; a pair of shoulder land portions that are respectively positioned on tire axial direction outer sides of the shoulder main grooves a first tread half from the tire equator to a first tread ground contact edge; and a second tread half from the tire equator to a second tread ground contact edge, which is a tread ground contact edge on an opposite side of the first tread ground contact edge. Grooves each having a width of 2 mm or more are not provided in the crown land portion and the middle land portions. In the first tread half, multiple first sipes each having a width of less than 2 mm are provided. In the first tread half, the first sipes each smoothly continuously extend from the crown land portion to the shoulder land portion via the crown main groove and the shoulder main groove. In the second tread half, multiple second sipes each having a width of less than 2 mm are provided. In the second tread half, the second sipes each smoothly continuously extend from the crown land portion to the shoulder land portion via the crown main groove and the shoulder main groove and are each terminated without reaching the second tread ground contact edge. Further, in the middle land portion of the second tread half, third sipes that each have a width of less than 2 mm and each extend in the tire axial direction are each provided between a pair of second sipes that are adjacent to each other in the tire circumferential direction.

In a pneumatic tire according to an embodiment of the present invention, it is desirable that the third sipes include: third inner side sipes that each extend from the crown main groove of the second tread half toward a tire axial direction outer side and are each terminated without reaching the shoulder main groove; and third outer side sipes that each extend from the shoulder main groove of the second tread half toward a tire axial direction inner side and are each terminated without reaching the crown main groove.

In a pneumatic tire according to an embodiment of the present invention, it is desirable that the first sipes include first crown sipes provided in the crown land portion, the second sipes include second crown sipes provided in the crown land portion, and a length of each of the first crown sipes is larger than a length of each of the second crown sipes.

In a pneumatic tire according to an embodiment of the present invention, it is desirable that the first crown sipes each extend from the crown main groove of the first tread half to beyond the tire equator and are each terminated without reaching the crown main groove on the other side.

In a pneumatic tire according to an embodiment of the present invention, it is desirable that the second crown sipes each extend from the crown main groove of the second tread half and are each terminated without reaching the tire equator.

In a pneumatic tire according to an embodiment of the present invention, it is desirable that a tire axial direction length of each of the third sipes is 60% - 80% of a tire axial direction length of the middle land portion in the second tread half.

In a pneumatic tire according to an embodiment of the present invention, it is desirable that, in each of the shoulder land portions, shoulder lug grooves are provided that each extend from the tread ground contact edge toward a tire axial direction inner side and are each terminated without reaching the shoulder main groove, and the shoulder lug grooves each have a linear portion that linearly extends from the tread ground contact edge at an angle of 85 - 95 degrees with respect to the tire circumferential direction, and a curved portion that is formed on a tire axial direction inner side of the linear portion and extends in an arc shape along the shoulder sipes.

In a pneumatic tire according to an embodiment of the present invention, it is desirable that the second sipes include second shoulder sipes that are provided in the shoulder land portion, and the second shoulder sipes are each terminated on a tire axial direction inner side of a tire axial direction outer side edge of the curved portion of each of the shoulder lug grooves in the second tread half.

In a pneumatic tire according to an embodiment of the present invention, it is desirable that the first sipes include first middle sipes that are provided in the middle land portion of the first tread half, and first shoulder sipes that are provided in the shoulder land portion of the first tread half, and the first middle sipes and the first shoulder sipes each have a deep portion and a shallow portion that has a depth smaller than that of the deep portion.

In a pneumatic tire according to an embodiment of the present invention, it is desirable that the second sipes include second middle sipes that are provided in the middle land portion of the second tread half, and second shoulder sipes that are provided in the shoulder land portion of the second tread half, the second middle sipes and the second shoulder sipes each have a deep portion and a shallow portion that has a depth smaller than that of the deep portion.

In a pneumatic tire according to an embodiment of the present invention, in the first tread half, the first sipes each smoothly continuously extend from the crown land portion to the shoulder land portion via the crown main groove and the shoulder main groove. As a result, the crown land portion, the middle land portion and the shoulder land portion of the first tread half deform in the same mode along the first sipes. Similarly, in the second tread half, the second sipes each smoothly continuously extend from the crown land portion to the shoulder land portion via the crown main groove and the shoulder main groove. As a result, the crown land portion, the middle land portion and the shoulder land portion of the second tread half deform in the same mode along the second sipes. Therefore, transient characteristics during cornering, in which a center of a tread surface moves from the crown land portion to the shoulder land portion, can be improved, and good steering stability can be obtained.

The second sipes are each terminated without reaching the second tread ground contact edge. As a result, rigidity of the shoulder land portion of the second tread half is increased, and grip performance during cornering, in which a ground contact pressure of the shoulder land portion of the second tread half is increased, can be improved, and good steering stability can be obtained.

Further, due to an edge effect achieved by the third sipes provided in the middle land portion of the second tread half, grip performance is improved and steering stability is more easily improved. Further, due to the second sipes and the third sipes, a density of the sipes gradually decreases from the middle land portion of the second tread half to the second tread ground contact edge. As a result, rigidity of the land portions is gradually increased from the middle land portion of the second tread half to the second tread ground contact edge, and transient characteristics and grip performance during cornering can be improved, and even better steering stability can be obtained.

Obviously, numerous modifications and variations of the present invention are possible in light of the above teachings. It is therefore to be understood that within the scope of the appended claims, the invention may be practiced otherwise than as specifically described herein.

**Claims**

1.  A pneumatic tire, comprising:

    a tread part (2) having a first crown main groove (3) and a second crown main groove (4) formed on outer sides of a tire equator and continuously extending in a tire circumferential direction respectively,
    a first shoulder main groove (5) and a second shoulder main groove (6) formed on a tire axial direction outer side of the respective crown main groove (3, 4) and continuously extending in the tire circumferential direction respectively,
    a crown land portion (10) formed between the the crown main grooves (3, 4),
    a first middle land portion (11) and a second middle land portion (12) formed between the respective crown main groove (3, 4) and shoulder main groove (5, 6), and
    a first shoulder land portion (13) and a second shoulder land portion (14) positioned on a tire axial direction outer side of the respective shoulder main groove (5, 6),
    wherein the crown land portion (10) and the middle land portions (11, 12) are formed such that no grooves each having a width of 2 mm or more are formed in the crown land portion (10) and the middle land portions (11, 12),
    wherein the tread part (2) has a first tread half (21) defined from the tire equator to a first tread ground contact edge (Te1) and a second tread half (22) defined from the tire equator to a second tread ground contact edge (Te2) on an opposite side with respect to the first tread ground contact edge (Te1),
    wherein the tread part (2) has a plurality of first sipes (25) formed in the first tread half (21) such that each first sipe (25) has a width of less than 2 mm and is divided into a first crown sipe (31), a first middle sipe (33) and a first shoulder sipe (35) by the first crown main groove (3) and the first shoulder main groove (5),
    wherein the tread part (2) has a plurality of second sipes (26) formed in the second tread half (22) such that each second sipe (26) has a width of less than 2 mm and is divided into a second crown sipe (32), a second middle sipe (34) and a second shoulder sipe (36) by the second crown main groove (4) and the second shoulder main groove (6), and
    wherein the tread part (2) has a plurality of third sipes (38) formed in the second middle land portion (12) in the second tread half (22) such that each third sipe (38) has a width of less than 2 mm and is extending in the tire axial direction between a pair of the second sipes (26) that are adjacent to each other in the tire circumferential direction,
    **characterized in that**
    each first middle sipe (33) is formed on an imaginary extension line that is formed by smoothly extending the first crown sipe (31), and each first shoulder sipe (35) is formed on a imaginary extension line that is formed by smoothly extending the first middle sipe (33) such that the first sipes (25) are extending smoothly continuously from the crown land portion (10) to the first shoulder land portion (13) via the first crown main groove (3) and the first shoulder main groove (5), and
    each second middle sipe (34) is formed on an imaginary extension line that is formed by smoothly extending the second crown sipe (32), and each second shoulder sipe (36) is formed on a imaginary extension line that is formed by smoothly extending the second middle sipe (34) such that the second sipes (26) are extending smoothly continuously from the crown land portion (10) to the second shoulder land portion (14) via the second crown main groove (4) and the second shoulder main groove (6) and terminated without reaching the second tread ground contact edge (Te2).

2.  The pneumatic tire according to claim 1,
    wherein the plurality of third sipes (38) includes a plurality of third inner side sipes (38i) and a plurality of third outer side sipes (38o) such that that each third inner side sipe (38i) is extending from the second crown main groove (4) of the second tread half (22) toward a tire axial direction outer side and terminated without reaching the second shoulder main groove (6) and that each third outer side sipe (38o) is extending from the second shoulder main groove (6) of the second tread half (22) toward a tire axial direction inner side and terminated without reaching the second crown main groove (4).

3. The pneumatic tire according to claim 1 or 2,
wherein each of the first crown sipes (31) and each of the second crown sipes (32) are formed such that a length of each first crown sipe (31) is greater than a length of each second crown sipe (32).

4. The pneumatic tire according to claim 3,
wherein each of the first crown sipes (31) is formed such that each first crown sipe (31) is extending from the first crown main groove (3) in the first tread half (21) to beyond the tire equator and terminated without reaching the second crown main groove (4) on the other side.

5. The pneumatic tire according to claim 2 or 3,
wherein each of the second crown sipes (32) is formed such that each second crown sipe (32) is extending from the second crown main groove (4) in the second tread half (22) and terminated without reaching the tire equator.

6. The pneumatic tire according to claim 2,
wherein the plurality of third sipes (38) is formed such that a tire axial direction length of each third sipes (38) is in a range of 60% to 80% of a tire axial direction length of the second middle land portion (12) in the second tread half (22).

7. The pneumatic tire according to any one of claims 1 to 6,
wherein each of the first and second shoulder land portions (13, 14) has a plurality of shoulder lug grooves (41, 42) formed such that each shoulder lug groove (41, 42) is extending from the respective tread ground contact edge (Te1, Te2) toward a tire axial direction inner side and terminated without reaching the respective shoulder main groove (5, 6), and each of the shoulder lug grooves (41, 42) has a linear portion (41a, 42a) linearly extending from the respective tread ground contact edge (Te1, Te2) at an angle in a range of 85 to 95 degrees with respect to the tire circumferential direction, and a curved portion (41b, 42b) formed on a tire axial direction inner side of the linear portion (41a, 42a) and extending in an arc shape along the respective shoulder sipes (35, 36).

8. The pneumatic tire according to claim 7,
wherein each of the second shoulder sipes (36) is formed such that each second shoulder sipe (36) is terminated on a tire axial direction inner side of a tire axial direction outer side edge of the curved portion (42b) of each of the shoulder lug grooves (42) in the second tread half (22).

9. The pneumatic tire according to any one of claims 1 to 8,
wherein each of the first middle sipes (33) and each of the first shoulder sipes (35) are formed such that each of the first middle and shoulder sipes (33, 35) has a deep portion (33a, 35a) and a shallow portion (33b, 33c, 35b, 35c) that has a depth smaller than a depth of the deep portion (33a, 35a).

10. The pneumatic tire according to any one of claims 1 to 9,
wherein each of the second middle sipes (34) and each of the second shoulder sipes (36) are formed such that each of the second middle and shoulder sipes (34, 36) has a deep portion (34a, 36a) and a shallow portion (34b, 34c, 34d, 36b) that has a depth smaller than a depth of the deep portion (34a, 36a).

**Patentansprüche**

1. Luftreifen, umfassend:

einen Laufflächenteil (2) mit einer ersten Kronenhauptrille (3) und einer zweiten Kronenhauptrille (4), die an Außenseiten eines Reifenäquators gebildet sind und sich jeweils kontinuierlich in einer Umfangsrichtung des Reifens erstrecken,
eine erste Schulterhauptrille (5) und eine zweite Schulterhauptrille (6), die auf einer in axialer Richtung des Reifens äußeren Seite der jeweiligen Kronenhauptrille (3, 4) gebildet sind und sich jeweils kontinuierlich in der Umfangsrichtung des Reifens erstrecken,

einen Kronenlandabschnitt (10), der zwischen den Kronenhauptrillen (3, 4) gebildet ist,

einen ersten mittleren Landabschnitt (11) und einen zweiten mittleren Landabschnitt (12), die zwischen der jeweiligen Kronenhauptrille (3, 4) und Schulterhauptrille (5, 6) gebildet sind, und

einen ersten Schulterlandabschnitt (13) und einen zweiten Schulterlandabschnitt (14), die auf einer in axialer Richtung des Reifens äußeren Seite der jeweiligen Schulterhauptrille (5, 6) angeordnet sind,

wobei der Kronenlandabschnitt (10) und die mittleren Landabschnitte (11, 12) derart gebildet sind, dass keine Rillen, die jeweils eine Breite von 2 mm oder mehr aufweisen, in dem Kronenlandabschnitt (10) und den mittleren Landabschnitten (11, 12) gebildet sind,

wobei der Laufflächenteil (2) eine erste Laufflächenhälfte (21), die von dem Reifenäquator bis zu einem ersten Laufflächen-Bodenkontaktrand (Te1) definiert ist, und eine zweite Laufflächenhälfte (22) aufweist, die von dem Reifenäquator bis zu einem zweiten Laufflächen-Bodenkontaktrand (Te2) auf einer gegenüberliegenden Seite bezogen auf den ersten Laufflächen-Bodenkontaktrand (Te1) definiert ist,

wobei der Laufflächenteil (2) mehrere erste Feinschnitte (25) aufweist, die in der ersten Laufflächenhälfte (21) derart gebildet sind, dass jeder erste Feinschnitt (25) eine Breite von weniger als 2 mm aufweist und durch die erste Kronenhauptrille (3) sowie durch die erste Schulterhauptrille (5) in einen ersten Kronenfeinschnitt (31), einen ersten mittleren Feinschnitt (33) und einen ersten Schulterfeinschnitt (35) geteilt ist,

wobei der Laufflächenteil (2) mehrere zweite Feinschnitte (26) aufweist, die in der zweiten Laufflächenhälfte (22) derart gebildet sind, dass jeder zweite Feinschnitt (26) eine Breite von weniger als 2 mm aufweist und durch die zweite Kronenhauptrille (4) sowie durch die zweite Schulterhauptrille (6) in einen zweiten Kronenfeinschnitt (32), einen zweiten mittleren Feinschnitt (34) und einen zweiten Schulterfeinschnitt (36) geteilt ist, und

wobei der Laufflächenteil (2) mehrere dritte Feinschnitte (38) aufweist, die in dem zweiten mittleren Landabschnitt (12) in der zweiten Laufflächenhälfte (22) derart gebildet sind, dass jeder dritte Feinschnitt (38) eine Breite von weniger als 2 mm aufweist und sich in der axialen Richtung des Reifens zwischen einem Paar der zweiten Feinschnitte (26) erstreckt, die in der Umfangsrichtung des Reifens zueinander benachbart sind,

**dadurch gekennzeichnet, dass**

jeder erste mittlere Feinschnitt (33) auf einer imaginären Verlängerungslinie gebildet ist, die durch ein glattes Verlängern des ersten Kronenfeinschnitts (31) gebildet ist, und jeder erste Schulterfeinschnitt (35) auf einer imaginären Verlängerungslinie gebildet ist, die durch ein glattes Verlängern des ersten mittleren Feinschnitts (33) gebildet ist, so dass sich die ersten Feinschnitte (25) glatt und kontinuierlich von dem Kronenlandabschnitt (10) über die erste Kronenhauptrille (3) und die erste Schulterhauptrille (5) bis zu dem ersten Schulterlandabschnitt (13) erstrecken, und

jeder zweite mittlere Feinschnitt (34) auf einer imaginären Verlängerungslinie gebildet ist, die durch ein glattes Verlängern des zweiten Kronenfeinschnitts (32) gebildet ist, und jeder zweite Schulterfeinschnitt (36) auf einer imaginären Verlängerungslinie gebildet ist, die durch ein glattes Verlängern des zweiten mittleren Feinschnitts (34) gebildet ist, so dass sich die zweiten Feinschnitte (26) glatt und kontinuierlich von dem Kronenlandabschnitt (10) über die zweite Kronenhauptrille (4) und die zweite Schulterhauptrille (6) bis zu dem zweiten Schulterlandabschnitt (14) erstrecken und enden, ohne den zweiten Laufflächen-Bodenkontaktrand (Te2) zu erreichen.

2. Luftreifen nach Anspruch 1,
   wobei die mehreren dritten Feinschnitte (38) mehrere dritte Innenseiten-Feinschnitte (38i) und mehrere dritte Außenseiten-Feinschnitte (38o) umfassen, so dass sich jeder dritte Innenseiten-Feinschnitt (38i) von der zweiten Kronenhauptrille (4) der zweiten Laufflächenhälfte (22) in Richtung einer in axialer Richtung des Reifens äußeren Seite erstreckt und endet, ohne die zweite Schulterhauptrille (6) zu erreichen, und dass sich jeder dritte Außenseiten-Feinschnitt (38o) von der zweiten Schulterhauptrille (6) der zweiten Laufflächenhälfte (22) in Richtung einer in axialer Richtung des Reifens inneren Seite erstreckt und endet, ohne die zweite Kronenhauptrille (4) zu erreichen.

3. Luftreifen nach Anspruch 1 oder 2,
   wobei jeder der ersten Kronenfeinschnitte (31) und jeder der zweiten Kronenfeinschnitte (32) derart gebildet ist, dass eine Länge jedes ersten Kronenfeinschnitts (31) größer als eine Länge jedes zweiten Kronenfeinschnitts (32) ist.

4. Luftreifen nach Anspruch 3,
   wobei jeder der ersten Kronenfeinschnitte (31) derart gebildet ist, dass sich jeder erste Kronenfeinschnitt (31) von der ersten Kronenhauptrille (3) in der ersten Laufflächenhälfte (21) bis über den Reifenäquator hinaus erstreckt und endet, ohne die zweite Kronenhauptrille (4) auf der anderen Seite zu erreichen.

5. Luftreifen nach Anspruch 2 oder 3,
   wobei jeder der zweiten Kronenfeinschnitte (32) derart gebildet ist, dass sich jeder zweite Kronenfeinschnitt (32) von der zweiten Kronenhauptrille (4) in der zweiten Laufflächenhälfte (22) erstreckt und endet, ohne den Reifenäquator zu erreichen.

**6.** Luftreifen nach Anspruch 2,
wobei die mehreren dritten Feinschnitte (38) derart gebildet sind, dass eine Länge jedes dritten Feinschnitts (38) in axialer Richtung des Reifens in einem Bereich von 60 % bis 80 % einer Länge des zweiten mittleren Landabschnitts (12) in der zweiten Laufflächenhälfte (22) in axialer Richtung des Reifens liegt.

**7.** Luftreifen nach einem der Ansprüche 1 bis 6,
wobei jeder von dem ersten und zweiten Schulterlandabschnitt (13, 14) mehrere Schulterstollenrillen (41, 42) aufweist, die derart gebildet sind, dass sich jede Schulterstollenrille (41, 42) von dem jeweiligen Laufflächen-Bodenkontaktrand (Te1, Te2) in Richtung einer in axialer Richtung des Reifens inneren Seite erstreckt und endet, ohne die jeweilige Schulterhauptrille (5, 6) zu erreichen, und dass jede der Schulterstollenrillen (41, 42) einen linearen Abschnitt (41a, 42a), der sich linear von dem jeweiligen Laufflächen-Bodenkontaktrand (Te1, Te2) unter einem Winkel in einem Bereich von 85 bis 95 Grad bezogen auf die Umfangsrichtung des Reifens erstreckt, sowie einen gekrümmten Abschnitt (41b, 42b) aufweist, der an einer in axialer Richtung des Reifens inneren Seite des linearen Abschnitts (41a, 42a) gebildet ist und sich in einer Bogenform entlang des jeweiligen Schulterfeinschnitts (35, 36) erstreckt.

**8.** Luftreifen nach Anspruch 7,
wobei jeder der zweiten Schulterfeinschnitte (36) derart gebildet ist, dass jeder zweite Schulterfeinschnitt (36) auf einer in axialer Richtung des Reifens inneren Seite eines in axialer Richtung des Reifens äußeren Seitenrands des gekrümmten Abschnitts (42b) jeder der Schulterstollenrillen (42) in der zweiten Laufflächenhälfte (22) endet.

**9.** Luftreifen nach einem der Ansprüche 1 bis 8,
wobei jeder der ersten mittleren Feinschnitte (33) und jeder der ersten Schulterfeinschnitte (35) derart gebildet sind, dass jeder der ersten mittleren Feinschnitte und Schulterfeinschnitte (33, 35) einen tiefen Abschnitt (33a, 35a) und einen flachen Abschnitt (33b, 33c, 35b, 35c) aufweist, der eine Tiefe kleiner als eine Tiefe des tiefen Abschnitts (33a, 35a) aufweist.

**10.** Luftreifen nach einem der Ansprüche 1 bis 9,
wobei jeder der zweiten mittleren Feinschnitte (34) und jeder der zweiten Schulterfeinschnitte (36) derart gebildet ist, dass jeder der zweiten mittleren Feinschnitte und Schulterfeinschnitte (34, 36) einen tiefen Abschnitt (34a, 36a) und einen flachen Abschnitt (34b, 34c, 34d, 36b) aufweist, der eine Tiefe kleiner als eine Tiefe des tiefen Abschnitts (34a, 36a) aufweist.

**Revendications**

**1.** Bandage pneumatique, comprenant :

une partie formant bande de roulement (2) ayant une première rainure principale de couronne (3) et une seconde rainure principale de couronne (4) formées sur des côtés extérieurs d'un équateur de pneumatique et s'étendant en continu dans une direction circonférentielle du pneumatique respectivement,
une première rainure principale d'épaulement (5) et une seconde rainure principale d'épaulement (6) formées sur un côté extérieur, en direction axiale du pneumatique, de la rainure principale de couronne respective (3, 4) et s'étendant en continu dans la direction circonférentielle du pneumatique respectivement,
une portion en relief de couronne (10) formée entre les rainures principales de couronne (3, 4),
une première portion en relief médiane (11) et une seconde portion en relief médiane (12) formées entre la rainure principale de couronne respective (3, 4) et la rainure principale d'épaulement (5, 6), et
une première portion en relief d'épaulement (13) et une seconde portion en relief d'épaulement (14) positionnées sur un côté extérieur, en direction axiale du pneumatique, de la rainure principale d'épaulement respective (5, 6),
dans lequel la portion en relief de couronne (10) et les portions en relief médianes (11, 12) sont formées de telle manière qu'aucune rainure ayant chacune une largeur de 2 mm ou plus sont formées dans la portion en relief de couronne (10) et dans les portions en relief médianes (11, 12),
dans lequel la partie formant bande de roulement (2) comprend une première moitié de bande de roulement (21) définie depuis l'équateur de pneumatique jusqu'à un premier bord de contact au sol (Te1) de la bande de roulement et une seconde moitié de bande de roulement (22) définie depuis l'équateur de pneumatique jusqu'à un second bord de contact au sol (Te2) de la bande de roulement sur un côté opposé par rapport au premier bord de contact au sol (Te) de la bande de roulement,

dans lequel la partie formant bande de roulement (2) possède une pluralité de premières fentes (25) formées dans la première moitié de bande de roulement (21) de telle façon que chaque première fente (25) a une largeur inférieure à 2 mm et est divisée en une première fente de couronne (31), en une première fente médiane (33) et en une première fente d'épaulement (35) par la première rainure principale de couronne (3) et par la première rainure principale d'épaulement (5),

dans lequel la partie formant bande de roulement (2) possède une pluralité de secondes fentes (26) formées dans la seconde moitié de bande de roulement (22) de telle façon que chaque seconde fente (26) a une largeur inférieure à 2 mm et est divisée en une seconde fente de couronne (32), en une seconde fente médiane (34) et en une seconde fente d'épaulement (36) par la seconde rainure principale de couronne (4) et par la seconde rainure principale d'épaulement (6), et

dans lequel la partie formant bande de roulement (2) possède une pluralité de troisièmes fentes (38) formées dans la seconde portion en relief médiane (12) dans la seconde moitié de bande de roulement (22) de telle façon que chaque troisième fente (38) a une largeur inférieure à 2 mm et s'étend dans la direction axiale du pneumatique entre une paire de secondes fentes (26) qui sont adjacentes l'une à l'autre dans la direction circonférentielle du pneumatique,

**caractérisé en ce que**

chaque première fente médiane (33) est formée sur une ligne de prolongement imaginaire qui est formée en prolongeant en douceur la première fente de couronne (31), et chaque première fente d'épaulement (35) est formée sur une ligne de prolongement imaginaire qui est formée en prolongeant en douceur la première fente médiane (33) de telle façon que les premières fentes (25) s'étendent en continu en douceur depuis la portion en relief de couronne (10) jusqu'à la première portion en relief d'épaulement (13) via la première rainure principale de couronne (3) et la première rainure principale d'épaulement (5), et

chaque seconde fente médiane (34) est formée sur une ligne de prolongement imaginaire qui est formée en prolongeant en douceur la seconde fente de couronne (32), et chaque seconde fente d'épaulement (36) est formée sur une ligne de prolongement imaginaire qui est formée en prolongeant en douceur la seconde fente médiane (34) de telle façon que les secondes fentes (26) s'étendent en continu en douceur depuis la portion en relief de couronne (10) jusqu'à la seconde portion en relief d'épaulement (14) via la seconde rainure principale de couronne (4) et la seconde rainure principale d'épaulement (6) et se terminent sans atteindre la seconde bordure de contact au sol (Te2) de la bande de roulement.

2. Bandage pneumatique selon la revendication 1,
dans lequel la pluralité de troisièmes fentes (38) inclut une pluralité de troisièmes fentes du côté intérieur (38i) et une pluralité de troisièmes fentes du côté extérieur (38o) de telle façon que chaque troisième fente du côté intérieur (38i) est en prolongement depuis la seconde rainure principale de couronne (4) de la seconde moitié de bande de roulement (22) vers un côté extérieur, en direction axiale du pneumatique, et se termine sans atteindre la seconde rainure principale d'épaulement (6), et que chaque troisième fente du côté extérieur (38o) est en prolongement depuis la seconde rainure principale d'épaulement (6) de la seconde moitié de bande de roulement (22) vers un côté intérieur en direction axiale du pneumatique et se termine sans atteindre la seconde rainure principale de couronne (4).

3. Bandage pneumatique selon la revendication 1 ou 2,
dans lequel chacune des premières fentes de couronne (31) et chacune des secondes fentes de couronne (32) sont formées de telle façon qu'une longueur de chaque première fente de couronne (31) est supérieure à une longueur de chaque seconde fente de couronne (32).

4. Bandage pneumatique selon la revendication 3,
dans lequel chacune des premières fentes de couronne (31) est formée de telle façon que chaque première fente de couronne (31) est en prolongement depuis la première rainure principale de couronne (3) dans la première moitié de bande de roulement (21) jusqu'au-delà de l'équateur de pneumatique et se termine sans atteindre la seconde rainure principale de couronne (4) sur l'autre côté.

5. Bandage pneumatique selon la revendication 2 ou 3,
dans lequel chacune des secondes fentes de couronne (32) est formée de telle façon que chaque seconde fente de couronne (32) est en prolongement depuis la seconde rainure principale de couronne (4) dans la seconde moitié de bande de roulement (22) et se termine sans atteindre l'équateur de pneumatique.

6. Bandage pneumatique selon la revendication 2,

dans lequel la pluralité de troisièmes fentes (38) sont formées de telle façon qu'une longueur, en direction axiale du pneumatique, de chacune des troisièmes fentes (38) est dans une plage de 60 % à 80 % d'une longueur, en direction axiale du pneumatique, de la seconde portion en relief médiane (12) dans la seconde moitié de bande de roulement (22).

7. Bandage pneumatique selon l'une quelconque des revendications 1 à 6,
dans lequel chacune de la première et de la seconde portion en relief d'épaulement (13, 14) possède une pluralité de rainures annexes d'épaulement (41, 42) formées de telle façon que chaque rainure annexe d'épaulement (41, 42) est en prolongement depuis la bordure de contact au sol (Te1, Te2) respective de la bande de roulement vers un côté intérieur, en direction axiale du pneumatique, et se termine sans atteindre la rainure principale d'épaulement respective (5, 6), et chacune des rainures annexes d'épaulement (41, 42) a une portion linéaire (41a, 42a) qui s'étend linéairement depuis la bordure de contact au sol (Te1, Te2) respective de la bande de roulement à un angle dans une plage de 85 à 95° par rapport à la direction circonférentielle du pneumatique, et une portion incurvée (41b, 42b) formée sur un côté intérieur, en direction axiale du pneumatique, de la portion linéaire (41a, 42a) et qui s'étend sous une forme en arc le long des fentes d'épaulement respectives (35, 36).

8. Bandage pneumatique selon la revendication 7,
dans lequel chacune des secondes fentes d'épaulement (36) est formée de telle façon que chaque seconde fente d'épaulement (36) se termine sur un côté intérieur, en direction axiale du pneumatique, d'une bordure, du côté extérieur en direction axiale du pneumatique, de la portion incurvée (42b) de chacune des rainures annexes d'épaulement (42) dans la seconde moitié de bande de roulement (22).

9. Bandage pneumatique selon l'une quelconque des revendications 1 à 8,
dans lequel chacune des premières fentes médianes (33) et chacune des premières fentes d'épaulement (35) sont formées de telle façon que chacune des premières fentes médianes et des premières fentes d'épaulement (33, 35) présente une portion profonde (33a, 35a) et une portion peu profonde (33b, 33c, 35b, 35c) qui a une profondeur plus faible qu'une profondeur de la portion profonde (33a, 35a).

10. Bandage pneumatique selon l'une quelconque des revendications 1 à 9,
dans lequel chacune des secondes fentes médianes (34) et chacune des secondes fentes d'épaulement (36) sont formées de telle façon que chacune des secondes fentes médianes et des secondes fentes d'épaulement (34, 36) présente une portion profonde (34a, 36a) et une portion peu profonde (34b, 34c, 34d, 36b) qui a une profondeur plus faible qu'une profondeur de la portion profonde (34a, 36a).

FIG. 1

EP 3 260 309 B1

FIG. 2

# FIG. 3

# FIG. 4

# FIG. 5

EP 3 260 309 B1

EP 3 260 309 B1

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014184828 A
- JP 2016022800 A
- JP 2012218650 A